# EUROPÄISCHE PATENTSCHRIFT

(11) **EP 2 235 734 B1**
(45) Veröffentlichungstag und Bekanntmachung des Hinweises auf die Patenterteilung: **04.09.2013**
(21) Anmeldenummer: 08871651.9
(22) Anmeldetag: 05.11.2008
(51) Int. Cl.: H01J 35/16, H01J 35/18

(54) **RÖNTGENSTRAHLERZEUGER SOWIE DESSEN VERWENDUNG IN EINEM RÖNTGENUNTERSUCHUNGS- ODER RÖNTGENPRÜFGERÄT**
X-RAY GENERATOR AND THE USE THEREOF IN AN X-RAY EXAMINATION OR X-RAY INSPECTION DEVICE
GÉNÉRATEUR DE RAYONS X ET SON UTILISATION DANS UN APPAREIL D'INSPECTION OU DE CONTRÔLE PAR RAYONS X

(30) Priorität: 29.01.2008 DE 102008006620
(43) Veröffentlichungstag der Anmeldung: 06.10.2010
(60) Teilanmeldung: 11006148.8
(73) Patentinhaber: Smiths Heimann GmbH, 65205 Wiesbaden (DE)
(72) Erfinder: KILIAN, Karl-Heinz, 65375 Östrich-Winkel (DE); BERMUTH, Jörg, 55122 Mainz (DE); GEUS, Georg, 65201 Wiesbaden (DE)
(74) Vertreter: Greif, Thomas
(86) Internationale Anmeldenummer: PCT/EP2008/009300
(87) Internationale Veröffentlichungsnummer: WO 2009/095047

(56) Entgegenhaltungen:
- WO-A-01/18842
- WO-A-2005/055270
- US-A1- 2002 063 500
- US-B1- 6 415 016

## Beschreibung

Die Erfindung betrifft einen Röntgenstrahlerzeuger mit einem röhrenförmigen Gehäuse und in dem Gehäuse angeordneten Baugruppen zur Erzeugung eines oder mehrerer Röntgenstrahlen sowie dessen Verwendung insbesondere in einem Röntgenprüfgerät zur Überprüfung von Gepäckstücken oder ähnlichem. Als Röntgenröhren bezeichnete Röntgenstrahlerzeuger weisen bekannterweise wenigstens eine Anode und wenigstens eine Kathode auf, die in einem evakuierten Gehäuse angeordnet sind. Das Gehäuse besteht in der Regel aus einem Glaskolben oder einem Metallzylinder, der mit Abschlussdeckeln verschlossen ist.

Ein Röntgenuntersuchungsgerät mit einem derart gestalteten Röntgenstrahler ist aus der DE 196 08 862 A1 bekannt. Es wird ein Röntgenstrahler mit einem Glaskolben verwendet.

In der DE 198 02 668 A1 wird ein Röntgenstrahlerzeuger beschrieben, der eine gemeinsame Anode und zwei Kathoden aufweist (Dual-Energy-Erzeuger), die ebenfalls in einem Glaskolben untergebracht sind.

Ein Vakuumgehäuse für eine Röntgenröhre beschreibt die DE 103 20 700 A1. Um die Lebensdauer zu steigern, wird ein bestimmter Bereich des Gehäuses mit einer Schutzschicht versehen. Die Schutzschicht besteht dabei unter anderem aus einem keramischen Hochtemperaturwerkstoff, der durch Plasmaspritzen auf die Wandung aufgebracht wird.

Aus der US-B1-6,415,016 ist eine Röntgenquelle bekannt, die ein Gehäuse und darin eine Kathode und eine Röntgenanode umfasst. Das röhrenförmige Gehäuse der Röntgenquelle kann aus Bornitrid, Sillziumnitrid oder anderer Keramik bestehen.

Das Dokument US 2002/063500 beschreibt eine Röntgenröhre, die in bildgebenden Verfahren und zur zerstörungsfreien Materialuntersuchung eingesetzt werden kann. Sie enthält ein zylinderförmiges Rohr, in dem eine Kathode und eine Röntgenanode angeordnet sind. Es besteht ebenso wie die das Rohr abschließenden Wände aus Keramik. Eine Röntgenröhre mit einem rohrförmigen Gehäuse aus Aluminiumoxid ist aus der WO 01/18842 A bekannt.

Dotiertes Aluminiumoxid ist aus WO2005/055270 bekannt.

Der Erfindung liegt die Aufgabe zugrunde, einen Röntgenstrahlerzeuger zu schaffen, der einfacher, kostengünstiger und mit besser reproduzierbaren Maßen herstellbar ist.

Diese Aufgabe wird nach der Erfindung dadurch gelöst, dass das Gehäuse des Röntgenstrahlerzeugers von einem Röhrenkörper gebildet wird, der aus Keramik besteht, die durch Dotierung eine so gute

Oberflächenleitfähigkeit aufweist, dass Ladungsnester verhindert werden. Der Deckel und der Boden des Gehäuses bestehen bevorzugt ebenfalls aus Keramik. Sie können vereinfacht und sicher durch ein Aktivlot-Verfahren mit dem Röhrenkörper verbunden werden.

Das benötigte Austrittsfenster für die Röntgenstrahlung lässt sich vorteilhaft als verdünnte Keramikschicht in den Röhrenkörper einarbeiten, beispielsweise einfräsen. Das Einbringen eines gesonderten Fensters ist somit nicht mehr notwendig.

Die verwendete Keramik sollte einen geringen Wärmeausdehnungskoeffizienten, eine hohe Vakuumdichtigkeit, sowie eine gute Oberflächenleitfähigkeit besitzen. Die gewünschte Oberflächenleitfähigkeit kann durch die Dotierung der Keramik erreicht werden. Ein gesonderter Arbeitsschritt zur Verbesserung der Leitfähigkeit, beispielsweise das Auftragen einer leitfähigen Beschichtung, ist dann nicht mehr erforderlich. Als geeignete Keramik hat sich eine Aluminiumoxidkeramik gezeigt.

Keramikmaterial bietet gegenüber Glas den weiteren Vorteil, dass die Maßhaltigkeit in Bezug auf die Positionierung von Anode zu Kathode in allen drei Raumrichtungen verbessert wird. Durch die Verwendung eines Aktivlotes zur Verbindung der einzelnen Komponenten wird der übliche Prozess der Vormetallisierung der Keramik bei der Fertigung von Metall- oder Keramikröhren deutlich vereinfacht Die Herstellung ist somit kostengünstiger.

Ein Röntgenstrahlerzeuger nach der Erfindung wird bevorzugt in einem Röntgenuntersuchungs- oder Röntgenprüfgerät eingesetzt. Bevorzugt erfolgt die Verwendung in Röntgenprüfgeräten zur Sicherheitsüberprüfung von Gepäckstücken oder anderen Gegenständen beispielsweise auf Flughäfen.

Nachfolgend wird die Erfindung anhand eines Ausführurlgsbeispiels erläutert.

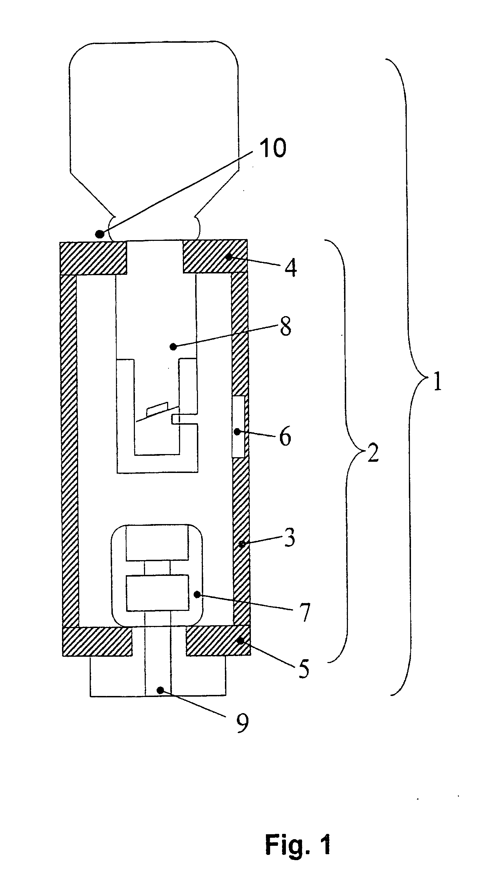

Figur 1 zeigt einen Schnitt durch einen erfindungsgemäßen Röntgenstrahlerzeuger.

Der Röntgenstrahlerzeuger 1 weist ein Gehäuse 2 auf, das aus einem Röhrenkörper 3 mit etwa ringförmigem Querschnitt, einem Deckel 4 und einem Boden 5 besteht. In dem Gehäuse 2 sind die bekannten Baugruppen zur Erzeugung eines oder mehrerer Röntgenstrahlen angeordnet. Die Kathode 7 und die Anode 8 sind in der Zeichnung dargestellt. Zumindest der Röhrenkörper 3 ist aus Keramik gefertigt, beispielsweise aus einer Aluminiumoxidkeramik. Für eine ausreichende Oberflächenleitfähigkeit ist die Keramik dotiert.

Der Deckel 4 und der Boden 5 sind bevorzugt ebenfalls aus einer geeigneten Keramik gefertigt und mit dem Röhrenkörper 3 durch ein Aktivlot-Verfahren verbunden. Dabei sind die elektrischen Zuleitungen 9 für die Kathode 7 und die elektrisch leitende Durchführung 10 der Anode 8 gasdicht im Boden 5 beziehungsweise im Deckel 4 befestigt. Die Befestigung erfolgt ebenfalls bevorzugt durch ein Aktivlot-Verfahren.

In den Röhrenkörper 3 ist ein Austrittsfenster 6 für die Röntgenstrahlen als verdünnte Keramikschicht eingearbeitet. Zur Verdünnung der Keramikschicht am Austrittsfenster 6 wird Keramik in dem entsprechenden Bereich abgetragen, beispielsweise abgefräst. Bevorzugt wird das Austrittsfenster 6 von innen in den Röhrenkörper 3 eingearbeitet. Das Austrittsfenster 6 befindet sich dann auf der Innenseite des Röhrenkörpers 3, wie in Figur 1 dargestellt ist. Dies hat den Vorteil, dass außen im Röhrenkörper 3 eine durchgehende Schicht verbleibt, die weiter entfernt von der Anode 8 ist als wenn sich das Fenster 6 außen befinden würde. Aufgrund der größeren Entfernung ist in diesem Bereich die Feldstärke geringer, so dass die Gefahr eines Durchschlags von Elektronen durch das Fenster 6 verringert wird.

Bevorzugt wird der in Figur 1 dargestellte Röntgenstrahlerzeuger 1 in einem Röntgenprüfgerät verwendet, das zur Sicherheitsüberprüfung von Gepäckstücken oder ähnlichen Gegenständen beispielsweise auf Flughäfen dient.

## Patentansprüche

1. Röntgenstrahlerzeuger (1) mit einem Gehäuse (2) und in dem Gehäuse (2) angeordneten Baugruppen zur Erzeugung eines oder mehrerer Röntgenstrahlen, wobei das Gehäuse (2) von einem Röhrenkörper (3) gebildet wird, der aus einer Keramik besteht, und **dadurch gekennzeichnet, dass** die Keramik durch Dotierung eine so gute Oberflächenleitfähigkeit aufweist, dass Ladungsnester verhindert werden.

2. Röntgenstrahlerzeuger nach Anspruch 1, **dadurch gekennzeichnet, dass** das Gehäuse (2) einen Deckel (4) und einen Boden (5) enthält, die ebenfalls aus Keramik bestehen.

3. Röntgenstrahlerzeuger nach einem der Ansprüche 1 oder 2, **dadurch gekennzeichnet, dass** der Röhrenkörper (3) mit dem Deckel (4) und/oder dem Boden (5) durch ein Aktivlot-Verfahren verbunden ist.

4. Röntgenstrahlerzeuger nach einem der Ansprüche 1 bis 3, **dadurch gekennzeichnet, dass** die verwendete Keramik eine Aluminiumoxidkeramik ist.

5. Röntgenstrahlerzeuger (1) nach einem der Ansprüche 1 bis 4, **dadurch gekennzeichnet, dass** ein Austrittsfenster (6) für die Röntgenstrahlen als verdünnte Keramikschicht in den Röhrenkörper (3) eingearbeitet ist.

6. Röntgenstrahlerzeuger nach Anspruch 5, **dadurch gekennzeichnet, dass** das Austrittsfenster (6) auf der Innenseite des Röhrenkörpers (3) in diesen eingearbeitet ist.

7. Verwendung eines Röntgenstrahlerzeugers (1) gemäß einem der Ansprüche 1 bis 6 in einem Röntgenuntersuchungs- oder Röntgenprüfgerät, insbesondere zur Sicherheitsüberprüfung von Gepäckstücken oder ähnlichen Gegenständen.

## Claims

1. X-ray generator (1) comprising a housing (2) and assemblies arranged in the housing (2) for generating one or more x-ray beams, the housing (2) being formed by a tube body (3) , which consists of a ceramic, and **characterized in that**, as a result of doping, the ceramic has such a good surface conductivity that charge clusters are prevented.

2. X-ray generator according to Claim 1, **characterized in that** the housing (2) includes a cover (4) and a base (5), which likewise consist of ceramic.

3. X-ray generator according to either of Claims 1 and 2, **characterized in that** the tube body (3) is connected to the cover (4) and/or the base (5) by an active brazing process.

4. X-ray generator according to one of Claims 1 to 3, **characterized in that** the ceramic used is an alumina ceramic.

5. X-ray generator (1) according to one of Claims 1 to 4, **characterized in that** an exit window (6) for the x-ray beams is incorporated in the tube body (3) as a thinned ceramic layer.

6. X-ray generator according to Claim 5, **characterized in that** the exit window (6) is incorporated in the tube body (3) on the inner side thereof.

7. Use of an x-ray generator (1) according to one of Claims 1 to 6 in an x-ray examination or x-ray inspection device, in particular for the security checking of items of luggage or similar articles.

## Revendications

1. Générateur de rayons X (1) avec une enceinte (2) et des modules disposés dans l'enceinte (2) pour la production d'un ou de plusieurs rayons X, dans lequel l'enceinte (2) est formée par un corps tubulaire (3) qui se compose d'une céramique, et **caractérisé en ce que** la céramique présente par dopage une conductibilité superficielle d'une qualité telle qu'elle empêche l'apparition de nids de charge.

2. Générateur de rayons X selon la revendication 1, **caractérisé en ce que** l'enceinte (2) comporte un couvercle (4) et un fond (5), qui sont également constitués de céramique.

3. Générateur de rayons X selon l'une des revendications 1 ou 2, **caractérisé en ce que** le corps tubulaire (3) est assemblé au couvercle (4) et/ou au fond (5) par un procédé de brasage actif.

4. Générateur de rayons X selon l'une quelconque des revendications 1 à 3, **caractérisé en ce que** la céramique utilisée est une céramique d'oxyde d'aluminium.

5. Générateur de rayons X (1) selon l'une quelconque des revendications 1 à 4, **caractérisé en ce qu'**une fenêtre de sortie (6) pour les rayons X est usinée dans le corps tubulaire (3) sous la forme d'une couche céramique amincie.

6. Générateur de rayons X selon la revendication 5, **caractérisé en ce que** la fenêtre de sortie (6) est usinée dans le corps tubulaire (3), dans la face intérieure de celui-ci.

7. Utilisation d'un générateur de rayons X (1) selon l'une quelconque des revendications 1 à 6 dans un appareil d'examen aux rayons X ou de contrôle aux rayons X, en particulier pour contrôler la sécurité de pièces d'emballage ou d'objets similaires.
